# EUROPÄISCHE PATENTANMELDUNG

(11) **EP 4 459 761 A1**
(43) Veröffentlichungstag der Anmeldung: **06.11.2024**
(21) Anmeldenummer: 23171071.6
(22) Anmeldetag: 02.05.2023
(51) Int. Cl.: H01M 50/204, H01M 50/249, H01M 50/267, H01M 50/284, H01M 10/04, H01M 10/42, H01M 50/509, H01M 50/519, H01M 16/00, H02J 7/00

(54) **BATTERIE MIT WIEDERAUFLADBAREN ELEKTROCHEMISCHEN ENERGIESPEICHERELEMENTEN**

(71) Anmelder: VARTA Microbattery GmbH, 73479 Ellwangen Jagst (DE)
(72) Erfinder: Faass, Andreas, 86756 Reimlingen (DE); Zander, David, 86720 Nördlingen (DE)
(74) Vertreter: Ostertag & Partner Patentanwälte mbB

(57) **Zusammenfassung**

Es wird eine Batterie (100) mit einem Gehäuse (101) und einer Mehrzahl darin angeordneter wiederaufladbarer elektrochemischer Energiespeicherelemente (110, 120) vorgeschlagen. Die Batterie umfasst einen positiven Pol und einen negativen Pol, die von außerhalb des Gehäuses der Batterie abgreifbar sind. Alle Energiespeicherelemente (110, 120) sind mit einer gemeinsamen Platine (104) verbunden und/oder in oder an einem gemeinsamen Zellhalterrahmen (103) angeordnet. Ein erster Teil der Energiespeicherelemente (110) ist durch serielle und/oder parallele Verschaltung zu einem Primärpack (1100) zusammengefasst, wobei das Primärpack eine erste Kapazität aufweist und eine erste Spannung liefert. Ein zweiter Teil der Energiespeicherelemente (120) ist durch serielle und/oder parallele Verschaltung zu einem Sekundärpack (1200) zusammengefasst, wobei das Sekundärpack vorzugsweise eine zweite Kapazität aufweist und eine zweite Spannung liefert. Das Primärpack (1100) weist einen positiven Ausgang auf, der mit dem positiven Pol der Batterie elektrisch verbunden ist, und das Primärpack (1100) weist einen negativen Ausgang auf, der mit dem negativen Pol der Batterie elektrisch verbunden ist. Die Energiespeicherelemente (110) des Primärpacks (1100) und die Energiespeicherelemente (120) des Sekundärpacks sind (1200) jeweils insgesamt über eine Batteriemanagement-Elektronik (1101, 1201) derart miteinander verschaltbar, dass sich die Kapazitäten und/oder Spannungen von Primärpack und Sekundärpack addieren. Zusätzlich oder alternativ ist jedes Energiespeicherelement (120) des Sekundärpacks (1200) einem oder mehreren Energiespeicherelementen (110) des Primärpacks (1100) zugeordnet und mit diesem oder diesen über eine Batteriemanagement-Elektronik (1101, 1201) derart verschaltbar, dass die Energiespeicherelemente (120) des Sekundärpacks das oder die jeweils zugeordneten Energiespeicherelemente (110) des Primärpacks unabhängig von den weiteren Energiespeicherelementen des Primärpacks laden und/oder entladen können.

## Beschreibung

Die vorliegende Erfindung betrifft eine Batterie mit einem Gehäuse und einer Mehrzahl darin angeordneter wiederaufladbarer elektrochemischer Energiespeicherelemente. Die Batterie eignet sich insbesondere zur Stromversorgung des Antriebs eines elektrischen Fahrrads.

### ANWENDUNGSGEBIET UND STAND DER TECHNIK

Fahrräder mit elektromotorischer Unterstützung sind weit verbreitet. Dabei dient der Elektromotor vor allem als Anfahrhilfe und zur Unterstützung der Kurbelbewegung. Es ist aber auch vollständige Übernahme des Antriebs durch den Elektromotor möglich. Für die Energieversorgung des Elektromotors wird in der Regel eine Batterie (im Folgenden Fahrradbatterie) verwendet, die eine Mehrzahl von wiederaufladbaren (sekundären) elektrochemischen Energiespeicherelementen, beispielsweise Lithium-Ionen-Zellen, umfasst. Innerhalb der Batterie sind die einzelnen Energiespeicherelemente in der Regel elektrisch miteinander verschaltet.

Solche wiederaufladbare Batterien werden auch als Akkumulatoren bezeichnet.

Für die Aufladung von Fahrradbatterien werden in der Regel Ladegeräte verwendet, die in an einen Haushalts-Stromnetzanschluss angeschlossen werden. Fahrradbatterien sind meistens als Wechsel-Batterien ausgebildet, die mit geeigneten Steckverbindungen sowohl am Fahrrad als auch an dem Ladegerät mit wenigen Handgriffen angeschlossen werden können.

Fahrradbatterien bzw. Akkumulatoren für Fahrräder umfassen oftmals ein längliches Gehäuse, in dem die Energiespeicherelemente enthalten sind. Der zur elektrischen Kontaktierung der Batterie notwendige Stecker wird üblicherweise bei der Batteriefertigung in eine Endkappe des Gehäuses eingesetzt. Beispielsweise zeigt die DE 102021211776 B3 einen solchen länglichen Akkumulator, bei dem in eine stirnseitige Endkappe des Gehäuses ein Stecker eingeschraubt ist.

Herkömmliche Batterien bzw. Akkumulatoren Fahrräder sind so aufgebaut, dass sie eine Mehrzahl von Energiespeicherelementen eines Typs enthalten, die je nach Anforderung seriell und/oder parallel verbunden sind, um die gewünschte elektrische Performance (Leistung, Kapazität) zu realisieren. Hieraus ergibt sich jedoch eine relativ geringe Flexibilität bei der Bereitstellung der Batterien, insbesondere wenn es sich um Batterien mit einer geringen Anzahl von Energiespeicherelementen handelt. Wenn zum Beispiel die Länge des Gehäuses so ausgelegt ist, dass zwölf Energiespeicherelemente nebeneinander angeordnet sind, so sind diese Zellen üblicherweise seriell miteinander verschaltet (12S). Wenn nun die Anzahl der Reihen von einer Reihe (1P) auf zwei Reihen (2P) erhöht wird, wobei diese Reihen jeweils parallel zueinander geschaltet sind, ergibt sich hieraus eine Erhöhung der Kapazität um 100 %. Wenn von zwei Reihen (2P) auf drei Reihen (3P) erhöht wird, ergibt sich hieraus ausgehend von 2P eine Erhöhung der Kapazität um weitere 50 %. Bei dieser Vorgehensweise ist es also nicht möglich, die Kapazität kleinschrittig an die jeweiligen Anforderungen anzupassen. Dies erschwert die anwendungsspezifische Konfektionierung.

Für eine flexible Anpassung an die jeweiligen Anforderungen schlägt die WO 2018/141455 A1 eine Fahrradbatterie vor, die mit mehreren einzelnen, austauschbaren Energiespeichermodulen ausgestattet ist, insbesondere auch mit mehreren Blindelementen. Je nach Bedarf kann eine entsprechende Anzahl von Modulen und Blindelementen vom Benutzer ausgewählt und die Gesamtbatterie entsprechend konfiguriert werden. Diese Herangehensweise löst jedoch das Bedürfnis nach einer größeren Flexibilität bei der Konfektionierung der Batterie nur in unbefriedigender Weise.

Die US 2022/0238943 A1 schlägt eine Kombination eines Akkumulators auf der Basis von Lithium-Ionen-Zellen mit einem Superkondensator vor. Diese beiden getrennten Energiespeicher, die jeweils mit getrennten Schutzschaltungen versehen sind, sind in einem gemeinsamen Gehäuse zusammengefasst. Der Superkondensator wird insbesondere als zusätzliche Energiequelle für eine höhere Beschleunigung genutzt. Eine solche Verknüpfung von Energiespeichern mit unterschiedlichen elektrischen Eigenschaften ist mit einem verhältnismäßig schlechten Integrationsfaktor verbunden, der sich auf das resultierende Gewicht und die Größe der gesamten Anordnung ungünstig auswirkt. Auch die Kosten erhöhen sich durch den erhöhten mechanischen Aufwand (zusätzlichen Bauteile für Gehäuse, Kabel, Verteilerbuchsen, Zellhalter etc.) in unvorteilhafter Weise.

### AUFGABE UND LÖSUNG

Vor diesem Hintergrund stellt sich die Erfindung die Aufgabe, eine Batterie bereitzustellen, die eine flexible Konfektionierung erlaubt und die an unterschiedliche Anforderungen im Hinblick auf Leistung und Kapazität angepasst werden kann.

Diese Aufgabe wird durch eine Batterie gelöst, wie sie sich aus dem Anspruch 1 ergibt. Vorteilhafte Ausgestaltungen der Batterie sind Gegenstand der abhängigen Ansprüche.

Die erfindungsgemäße Batterie umfasst ein Gehäuse und eine Mehrzahl von wiederaufladbaren elektrochemischen Energiespeicherelementen, die innerhalb des Gehäuses angeordnet sind. Weiterhin ist die Batterie mit einem positiven Pol und einem negativen Pol ausgestattet, die von außerhalb des Gehäuses abgreifbar sind. Zunächst zeichnet sich diese Batterie durch die folgenden Merkmale a. bis d. aus:
a. Alle Energiespeicherelemente sind mit einer gemeinsamen Platine verbunden und/oder in oder an einem gemeinsamen Zellhalterrahmen angeordnet; und
b. ein erster Teil der Energiespeicherelemente ist durch serielle und/oder parallele Verschaltung zu einem Primärpack zusammengefasst, wobei das Primärpack eine erste Kapazität aufweist und eine erste Spannung liefert; und
c. ein zweiter Teil der Energiespeicherelemente ist durch serielle und/oder parallele Verschaltung zu einem Sekundärpack zusammengefasst, wobei das Sekundärpack vorzugsweise eine zweite Kapazität aufweist und eine zweite Spannung liefert; und
d. das Primärpack weist einen positiven Ausgang auf, der mit dem positiven Pol der Batterie elektrisch verbunden ist, und das Primärpack weist einen negativen Ausgang auf, der mit dem negativen Pol der Batterie elektrisch verbunden ist.
   Die erfindungsgemäße Batterie zeichnet sich weiter durch mindestens eines der folgenden Merkmale e. und f. aus:
e. Die Energiespeicherelemente des Primärpacks und die Energiespeicherelemente des Sekundärpacks sind jeweils insgesamt über eine Batteriemanagement-Elektronik derart miteinander verschaltbar, dass sich die Kapazitäten und/oder Spannungen von Primärpack und Sekundärpack, insbesondere die Kapazitäten von Primärpack und Sekundärpack addieren;
   und/oder
f. jedes Energiespeicherelement des Sekundärpacks ist einem oder mehreren Energiespeicherelementen des Primärpacks zugeordnet und mit diesem oder diesen über eine Batteriemanagement-Elektronik derart verschaltbar, dass die Energiespeicherelemente des Sekundärpacks das oder die jeweils zugeordneten Energiespeicherelemente des Primärpacks unabhängig von den weiteren Energiespeicherelementen des Primärpacks laden und/oder entladen können.

Die vorgenannten Merkmale e. und f. können alternativ verwirklicht sein. Besonders bevorzugt ist dabei die Realisierung des Merkmals e. Es kann aber auch vorgesehen sein, dass die Merkmale e. und f. in Kombination miteinander verwirklicht sind.

Gemäß dem vorgenannten Merkmal e. sind die Energiespeicherelemente des Primärpacks elektrisch miteinander verschaltet oder verschaltbar. Getrennt davon sind die Energiespeicherelemente des Sekundärpacks elektrisch miteinander verschaltet oder verschaltbar. Es handelt sich bei dem Primärpack und dem Sekundärpack um zwei voneinander getrennte Sub-Batteriepacks. Gegebenenfalls können auch noch weitere Sub-Batteriepacks, beispielsweise ein Tertiärpack, vorgesehen sein. Die Sub-Batteriepacks können wiederum über die Batteriemanagement-Elektronik miteinander verschaltet werden, so dass sich ihre Kapazitäten und/oder Spannungen addieren. Erfindungswesentlich ist hierbei, dass alle Energiespeicherelemente der Batterie in einen gemeinsamen mechanischen Aufbau integriert sind, wobei alle Energiespeicherelemente der Subpacks mit der gemeinsamen Platine verbunden sind oder alternativ oder zusätzlich in oder an dem gemeinsamen Zellhalterrahmen angeordnet sind.

Es ist bevorzugt, dass bei den Topologien gemäß den vorgenannten Merkmalen e. und f. das Primärpack die Systemspannung der Batterie darstellt und die Energiespeicherelemente des Sekundärpacks eine unterstützende Funktion für den Primärpack bereitstellen.

Die Topologie gemäß dem vorgenannten Merkmal e. erlaubt eine Verbesserung der nutzbaren Kapazität oder Leistungsfähigkeit der Gesamtbatterie, indem die Kapazität und/oder die Leistung des Sekundärpacks der Kapazität und/oder der Leistung des Primärpacks zugeschaltet werden kann.

Gemäß der Topologie gemäß dem vorgenannten Merkmal f. können die Energiespeicherelemente des Sekundärpacks für ein aktives Balancing der Energiespeicherelemente des Primärpacks genutzt werden. Hierbei kann der Ladezustand einzelner Energiespeicherelemente des Primärpacks bei Bedarf mittels der Energiespeicherelemente des Sekundärpacks reguliert werden. Beim Entladen der Batterie können die Energiespeicherelemente des Sekundärpacks auf Einzelzellebene bei Bedarf zusätzliche Kapazitäten für die Energiespeicherelemente des Primärpacks bereitstellen, um eine Tiefenentladung einzelner Energiespeicherelemente des Primärpacks zu vermeiden. Das aktive Balancing gewährleistet eine gleichmäßige elektrische Ladungsverteilung in allen Energiespeicherelementen des Primärpacks und schützt vor kritischen Ladezuständen. Es können sowohl einer kritischen Tiefenentladung als auch einer Überladung entgegengewirkt werden.

Gemäß der Erfindung können Batterien bereitgestellt werden, die im Hinblick auf Gewicht und Größe und im Hinblick auf die geforderte Kapazität und Leistung optimal an die jeweiligen Anforderungen angepasst sind.

In besonders bevorzugter Weise zeichnet sich die erfindungsgemäße Batterie durch mindestens eines der folgenden zusätzlichen Merkmale aus:
a. Die Energiespeicherzellen des Sekundärpacks und/oder die Batteriemanagement-Elektronik sind zur Erhöhung der von den Energiespeicherzellen des Primärpacks bereitgestellten ersten Kapazität ausgebildet.
b. Die Erhöhung der Kapazität beträgt ein nicht ganzzahliges Mehrfaches der von den Energiespeicherzellen des Primärpacks bereitgestellten ersten Kapazität.

Vorzugsweise sind die vorgenannten Merkmale a. und b. in Kombination miteinander verwirklicht.

Ein besonderer Vorteil der Erfindung liegt darin, dass die Gesamtkapazität der Batterie auf ein nicht ganzzahliges Mehrfaches der Kapazität des Primärpacks erhöht werden kann. Dies geschieht, ohne den Integrationsfaktor der Gesamtbatterie maßgeblich zu beeinflussen, da der zusätzliche Aufwand für die logische Verschaltung des Sekundärpacks über die Stromverteilungseinheit bzw. die Platine und/oder über das Batteriemanagementsystem realisiert wird. Dadurch, dass die Anzahl der Energiespeicherelemente in dem Primärpack und in dem Sekundärpack im Prinzip frei wählbar ist, erlaubt dies eine sehr hohe Flexibilität bei der Konfektionierung der Gesamtbatterie, die je nach den Wünschen des Herstellers oder des Kunden flexibel angepasst werden kann. So kann beispielsweise die Kapazität um 25 % erhöht werden, ohne die Gesamtspannung zu verändern.

Gemäß den obigen Erläuterungen zeichnet sich die erfindungsgemäße Batterie zusätzlich oder alternativ durch das folgende zusätzliche Merkmal a. aus:
a. Die Energiespeicherzellen des Sekundärpacks und/oder die Batteriemanagement-Elektronik sind für ein aktives Balancing der Energiespeicherzellen des Primärpacks ausgebildet.

In besonders bevorzugter Weise ist mindestens eines der folgenden zusätzlichen Merkmale a. und b. vorgesehen:
a. Die Batterie umfasst ein Batteriemanagementsystem, dass das aktive Balancing und/oder die Verschaltung der Energiespeicherelemente des Primärpacks und der Energiespeicherelemente des Sekundärpacks zwecks Erhöhung der von den Energiespeicherzellen des Primärpacks bereitgestellten Kapazität und/oder Spannung steuert und/oder regelt.
b. Das Batteriemanagement-System umfasst erste Mess- und/oder Steuer- und/oder Schutzschaltkreise für das Primärpack und zweite Mess- und/oder Steuer- und oder Schutzschaltkreise für das Sekundärpack und einen Mikroprozessor zur Ansteuerung der Schaltungen.

Die gesamte Steuerung der Batterie erfolgt vorzugsweise über das Batteriemanagementsystem. Dieses Batteriemanagementsystem ist insbesondere auf der bereits erwähnten gemeinsamen Platine realisiert, die mit den Steuerschaltkreisen und Mess- und Schutzschaltkreisen sowie dem Mikroprozessor versehen ist. Bevorzugt ist dem Primärpack und dem Sekundärpack jeweils ein eigener Schutzschaltkreis zugeordnet.

Vorzugsweise zeichnet sich die erfindungsgemäße Batterie durch das folgende zusätzliche Merkmal aus:
a. Das Sekundärpack (1200) und das Primärpack (1100) sind parallel geschaltet.

Die parallele Verschaltung des Sekundärpacks mit dem Primärpack ist insbesondere im Hinblick auf die beschriebene Erhöhung der Kapazität der Gesamtbatterie zweckmäßig.

Vorzugsweise ist das folgende zusätzliche Merkmal vorgesehen:
a. Die Batterie umfasst einen Spannungswandler.
b. Der Spannungswandler ist dazu ausgebildet, die Spannung des Sekundärpacks auf die Spannung des Primärpacks zu erhöhen.

Durch Umwandlung der Spannung können das Primärpack und das Sekundärpack auf das gleich Spannungsniveau gebracht werden.

Besonders bevorzugt ist ein bidirektionaler Gleichspannungswandler.

In bevorzugten Ausführungsformen der erfindungsgemäßen Batterie stellt die Batterie eine Hauptspannungsleitung und eine Nebenspannungsleitung bereit. In besonders bevorzugter Weise ist die Batterie in dieser Hinsicht gemäß mindestens einem der folgenden zusätzlichen Merkmale ausgebildet:
a. Das Primärpack liefert eine Hauptspannung in einem Spannungsbereich von 30 bis 60 Volt, vorzugsweise von 48 Volt.
b. Das Sekundärpack liefert eine Nebenspannung in einem Spannungsbereich von 8 bis 15 Volt, vorzugsweise 9 bis 13 Volt, besonders bevorzugt von 12 Volt.

In dieser Konfiguration ist das Primärpack gemäß dem vorgenannten Merkmal a. in erster Linie für die Bereitstellung elektrischer Energie für einen elektrischen Antrieb, beispielsweise den elektrischen Antrieb eines Fahrrads, vorgesehen. Mit der Energie können das Anfahren oder die Kurbelbewegung unterstützt werden oder aber die Energie dient zum alleinigen Antrieb des elektrischen Antriebs. Die Nebenspannung kann für andere Funktionen genutzt werden, im Fall eines Fahrrads beispielsweise für den Betrieb von Lichtern und/oder für Heizungen des Sattels und/oder des Lenkers, für Radar-Funktionen, für einen Airbag oder für Ähnliches.

Im Hinblick auf die Anzahl und die Verteilung der einzelnen Energiespeicherelemente in dem Primärpack und dem Sekundärpack der erfindungsgemäßen Batterie zeichnet sich die Batterie in besonders bevorzugten Ausgestaltungen durch mindestens eines der folgenden zusätzlichen Merkmale aus:
a. In dem Primärpack sind mehr elektrochemische Energiespeicherelemente angeordnet als in dem Sekundärpack;
b. in dem Primärpack sind 24 bis 42, vorzugsweise 24, elektrochemische Energiespeicherelemente angeordnet;
c. in dem Sekundärpack sind 4 bis 12, vorzugsweise 6, elektrochemische Energiespeicherelemente angeordnet.

Vorzugsweise sind die vorgenannten Merkmale a. und b. und besonders bevorzugt die vorgenannten Merkmale a., b. und c. in Kombination miteinander realisiert.

Diese bevorzugten Anzahlen der Energiespeicherelemente innerhalb der erfindungsgemäßen Batterie sind insbesondere für die Realisierung von Energiespeichern bzw. Akkumulatoren für handelsübliche elektrische Fahrräder geeignet.

Bevorzugt werden innerhalb der Primärpacks und innerhalb des Sekundärpacks jeweils ausschließlich Energiespeicherelemente verwendet, die die gleiche Nennspannung und die gleiche Nennkapazität aufweisen.

Weiterhin ist bevorzugt, dass innerhalb der Primärpacks und innerhalb des Sekundärpacks jeweils ausschließlich Energiespeicherelemente verwendet, die ähnliche Dimensionen aufweisen.

Ein Beispiel sind Lithium-Ionen-Zellen des Formats 21700.

Die Verschaltung der Energiespeicherelemente innerhalb des Primärpacks und innerhalb des Sekundärpacks ist in besonders bevorzugten Ausführungsformen der erfindungsgemäßen Batterie gemäß mindestens einem der folgenden zusätzlichen Merkmale realisiert:
a. Das Primärpack umfasst zwei bis vier, bevorzugt zwei oder drei, parallel verschaltete Reihen mit jeweils 10 bis 20, bevorzugt 12 bis 14, seriell verschalteten Energiespeicherelementen.
b. Das Sekundärpack umfasst ein bis drei parallel verschalteten Reihe(n) mit jeweils 2 bis 6, bevorzugt 6, seriell verschalteten Energiespeicherelementen, wobei im Fall von zwei oder drei Reihen die Reihen parallel verschaltet sind.

Vorzugsweise sind die vorgenannten Merkmale a. und b. in Kombination miteinander verwirklicht.

In einer bevorzugten Ausführungsform einer erfindungsgemäßen Batterie mit insgesamt 30 Energiespeicherelemente kann das Primärpack beispielsweise 24 Energiespeicherelemente in einer 12S2P-Konfiguration (zwei parallel geschaltete Reihen aus jeweils 12 seriell miteinander verschalteten Energiespeicherelementen) umfassen und das Sekundärpack sechs Energiespeicherelemente in einer 6S1P-Konfiguration (eine Reihe aus sechs seriell verschalteten Energiespeicherelementen), wobei das Primärpack und das Sekundärpack ebenfalls parallel miteinander verschaltet sind.

In anderen Ausführungsformen können beispielsweise insgesamt 45 Energiespeicherelemente in der Batterie vorgesehen sein, wobei 39 Energiespeicherelemente vom Primärpack (in einer 13S3P-Konfiguration mit drei parallelen Reihen aus jeweils 13 seriell verschalteten Energiespeicherelementen) und sechs Energiespeicherelemente vom Sekundärpack (in einer 6S1P-Konfiguration mit einer Reihe aus sechs seriell verschalteten Energiespeicherelementen) umfasst sind.

Insbesondere mit Batterien in diesen Ausführungsformen lassen sich Akkumulatoren herstellen, die besonders geeignet für handelsübliche elektrische Fahrräder sind. Problemlos können auf diese Weise Batterien mit Kapazitäten in einem Bereich von 400 bis 940 Wh, beispielsweise von 500 Wh, realisiert werden.

Für die erfindungsgemäße Batterie können alle herkömmlichen sekundären elektrochemischen Energiespeicherelemente eingesetzt werden, wobei neben Rundzellen grundsätzlich auch prismatische Zellen in Frage kommen. Besonders bevorzugt sind jedoch zylindrische Rundzellen. Der Vorteil der zylindrischen Rundzellen liegt vor allem darin, dass die Rundzellen sehr eng gepackt werden können, wobei dennoch zwischen den Rundzellen Freiräume verbleiben, die im Hinblick auf eine elektrische sowie thermische Isolation zwischen den Einzelzellen sehr vorteilhaft sind.

In ganz besonders bevorzugten Ausführungsformen der erfindungsgemäßen Batterie zeichnet sich die Batterie im Hinblick auf die elektrochemischen Energiespeicherelemente durch mindestens eines der folgenden zusätzlichen Merkmale aus:
a. Die Energiespeicherelemente sind zylindrische Rundzellen.
b. die Energiespeicherelemente sind Zellen vom Typ 21700.
c. die Energiespeicherelemente sind Lithium-Ionen-Energiespeicherelemente.

Vorzugsweise sind die vorgenannten Merkmale a. und b. und, besonders bevorzugt, die vorgenannten Merkmale a., b. und c. in Kombination miteinander verwirklicht.

In besonders bevorzugter Weise sind die elektrochemischen Energiespeicherelemente der erfindungsgemäßen Batterie zylindrische Rundzellen, die innerhalb des Gehäuses mit paralleler Ausrichtung ihrer Längsachsen in einer Ebene in möglichst enger Packung angeordnet sind. Die Energiespeicherelemente können dabei auch in mehreren Reihen angeordnet sein.

Der Typ 21700 bezeichnet den bevorzugten Formfaktor der Energiespeicherelemente und bezieht sich auf einen Außendurchmesser von 21 mm und eine Länge von 70 mm. Besonders bevorzugt sind Lithium-Ionen-Energiespeicherelemente, da Lithium-Ionen-Energiespeicherelemente sich durch eine besonders große Energiedichte bei vergleichsweise niedrigem Gewicht auszeichnen.

Allgemein basieren Lithium-Ionen-Energiespeicherelemente auf dem Einsatz von Lithium, welches in Form von Ionen zwischen den Elektroden des Elements hin und her wandern kann.

Die negative Elektrode und die positive Elektrode eines Lithium-Ionen-Energiespeicherelements werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Elemente kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoOz), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Die Aktivmaterialien sind in der Regel als Schicht auf einem bandförmige Stromkollektor aufgebracht. Der Stromkollektor stellt dabei eine elektrochemisch inaktive Komponente des Energiespeicherelements dar. Als Stromkollektoren kommen insbesondere metallische Folien zum Einsatz, die als Träger für das jeweilige Aktivmaterial dienen. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Energiespeicherelemente meist Lösungen von Lithiumsalzen wie Lithiumhexafluorophosphat (LiPF₆) in organischen Lösungsmitteln (z. B. Ether und Ester der Kohlensäure).

In zylindrischen Rundzellen sind die Elektroden der Zelle in der Regel in Form eines Wickels angeordnet, wobei zwischen den bandförmigen Elektroden mindestens ein bandförmiger Separator angeordnet ist. In anderen Ausführungsformen, insbesondere bei prismatischen Energiespeicherelementen, können die Elektroden auch in gestapelter Form vorliegen.

In einigen bevorzugten Ausgestaltungen der erfindungsgemäßen Batterie ist das folgende zusätzliche Merkmal vorgesehen:
a. Die Energiespeicherelemente des Sekundärpacks haben andere elektrische Eigenschaften als die Energiespeicherelemente des Primärpacks.

In einer erfindungsgemäßen Batterie können auch Energiespeicherelemente mit unterschiedlichen elektrischen Eigenschaften miteinander kombiniert werden. So ist es beispielsweise möglich, Energiespeicherelemente unterschiedlicher Hersteller, Dimensionen oder unterschiedlicher Zellchemien miteinander zu kombinieren und gezielt die jeweiligen Eigenschaften der unterschiedlichen Energiespeicherelemente zu nutzen.

Bei den Energiespeicherelementen des Primärpacks kann es sich beispielsweise um Lithiumlonen-Zellen handeln und bei den Energiespeicherelementen des Sekundärpacks um Superkondensatoren oder anderes.

In besonders bevorzugten Ausführungsformen der erfindungsgemäßen Batterie zeichnet sich die Batterie durch mindestens eines der folgenden zusätzlichen Merkmale aus:
a. Die Batterie ist ein Wechsel-Akkumulator.
b. Die Batterie ist ein Akkumulator für ein elektrisches Fahrzeug.
c. Die Batterie ist ein Akkumulator für ein elektrisches Fahrrad.

Vorzugsweise sind die vorgenannten Merkmale a. und b. und, besonders bevorzugt, die vorgenannten Merkmale a. bis c. in Kombination miteinander realisiert.

In ganz besonders bevorzugter Weise ist die erfindungsgemäße Batterie ein Wechsel-Akkumulator, der mit wenigen Handgriffen an einen elektrischen Verbraucher und bei Bedarf an eine Ladeeinrichtung zum Aufladen des Akkumulators angeschlossen werden kann.

Der erfindungsgemäße Akkumulator kann für grundsätzlich jedes elektrische Fahrzeug eingesetzt werden, beispielsweise für einen elektrischen Roller, einen elektrischen Rollstuhl oder andere elektrische Fahrzeuge. Weiterhin kann der Akkumulator beispielsweise für die Energieversorgung eines Roboters, beispielsweise eines Serviceroboters oder für Ähnliches, verwendet werden. Grundsätzlich ist er auch als Spannungsquelle für elektrische Werkzeuge einsetzbar.

In ganz besonders bevorzugten Ausführungsformen handelt es sich bei der erfindungsgemäßen Batterie um einen Akkumulator für ein elektrisches Fahrrad. Insbesondere bei einem elektrischen Fahrrad kommen die besonderen Vorteile der erfindungsgemäßen Batterie besonders zum Tragen, da die erfindungsgemäße Batterie bzw. der Akkumulator für das jeweilige Anforderungsprofil bei der Herstellung des Fahrrads in sehr vorteilhafter Weise konfektioniert werden können.

Im Hinblick auf vorteilhafte Ausgestaltungen des Gehäuses der erfindungsgemäßen Batterie zeichnet sich die Batterie bevorzugt durch mindestens eines der folgenden zusätzlichen Merkmale aus:
a. Das Gehäuse umfasst eine metallische Röhre.
b. Das Gehäuse umfasst eine Röhre aus Aluminium.
c. Das Gehäuse umfasst eine metallische Röhre mit einem rechteckigen Querschnitt.

Vorzugsweise sind die vorgenannten Merkmale a. und b. und, besonders bevorzugt, die vorgenannten Merkmale a. bis c. in Kombination miteinander realisiert.

Ein metallisches Gehäuse hat den Vorteil, dass hierdurch eine besondere Stabilität der Batterie erreicht wird. Eine solche Stabilität wird regelmäßig bei einer Batterie beispielsweise für ein elektrisches Fahrrad bereits aus Sicherheitsgründen gefordert. Aluminium eignet sich besonders, da hierdurch das Gewicht der resultierenden Batterie verhältnismäßig niedrig gehalten werden kann. Darüber hinaus hat Aluminium den weiteren Vorteil, dass es gute Wärmeabführungseigenschaften aufweist, die für die erfindungsgemäße Batterie vorteilhaft sind.

Besonders geeignet ist ein längliches Gehäuse mit einem rechteckigen Querschnitt, wobei das Gehäuse vorzugsweise von einer metallischen Röhre mit einem rechteckigen Querschnitt und zwei Endkappen, vorzugsweise aus Kunststoff, gebildet wird. Eine solche Form des Gehäuses gewährleistet zum einen eine hohe Stabilität und bietet zum anderen vorteilhafte Möglichkeiten zur Anordnung der Energiespeicherelemente innerhalb des Gehäuses. Die längliche Form des Akkumulators macht die Batterie weiterhin insbesondere für die Verwendung als Fahrrad-Akkumulator geeignet, da ein solches längliches Gehäuse in vorteilhafter Weise am oder im Bereich des Rahmens eines Fahrrads angebracht werden kann.

In besonders bevorzugter Weise werden die elektrochemischen Energiespeicherelemente in einem Zellhalterrahmen aus Kunststoff gehalten bzw. sind darin oder daran angeordnet. Ein solcher Rahmen hält und fixiert die Energiespeicherelemente innerhalb der Batterie und stabilisiert die Anordnung der Energiespeicherelemente beispielsweise auch bei einem Sturz oder anderen Erschütterungen. Das Kunststoffmaterial des Zellhalters sorgt für ein verhältnismäßig geringes Gewicht der Batterie, so dass ein solcher Zellhalter insbesondere für den Einsatz der Batterie als Fahrrad-Akkumulator geeignet ist. Geeignete Kunststoffmaterialien sind dem Fachmann bekannt.

Insgesamt erlaubt die Erfindung die hochflexible Konfektionierung von Batterien in Abhängigkeit der jeweils gewünschten Applikation.

Bei der erfindungsgemäßen Batterie kann zum einen insbesondere die Kapazität der Batterie flexibel erweitert werden, wobei das Sekundärpack die zusätzliche Kapazität bereitstellt. Zum anderen kann das Sekundärpack für ein aktives Balancing der Energiespeicherelemente des Primärpacks genutzt werden, wobei die Energie des Sekundärpacks auf einzelne Energiespeicherelemente des Primärpacks übertragen oder davon abgezogen werden kann. Hierbei sind unterschiedliche Kombinationen und Einsatzmöglichkeiten realisierbar.

Der besondere Vorteil der Erfindung liegt darin, dass verschiedene Anforderungen an die Batterie sehr präzise erfüllt werden können. Durch die Kombination von Primärpack und Sekundärpack oder gegebenenfalls weiterer Subpacks können die geforderten Eigenschaften, beispielsweise im Hinblick auf die Antriebstechnik, flexibel erfüllt werden, so dass sich die Batterie sehr gut an verschiedene Anforderungen anpassen lässt. Auch für den Endverbraucher, beispielsweise für den Fahrradkunden, ergeben sich hierdurch Vorteile, da bei der sehr gut angepassten Batterie beispielsweise Gewicht und Volumen der Batterie optimiert sind.

Weitere Merkmale und Vorteile der Erfindung ergeben sich aus der nachfolgenden Beschreibung von bevorzugten Ausführungsbeispielen in Verbindung mit den Zeichnungen. Hierbei können die einzelnen Merkmale jeweils für sich oder in Kombination miteinander realisiert sein.

In den Figuren zeigen:
- Fig. 1: Seitliche Außenansicht einer bevorzugten Ausführungsform einer erfindungsgemäßen Batterie;
- Fig. 2: Seitliche Ansicht einer erfindungsgemäßen Batterie mit entferntem Gehäuse;
- Fig. 3: Blockschaltbild zur Illustrierung der Funktionsweise einer erfindungsgemäßen Batterie in einer bevorzugten Ausführungsform; und
- Fig. 4: Blockschaltbild zur Illustrierung der Funktionsweise einer erfindungsgemäßen Batterie in einer weiteren bevorzugten Ausführungsform.

### BESCHREIBUNG VON AUSFÜHRUNGSBEISPIELEN

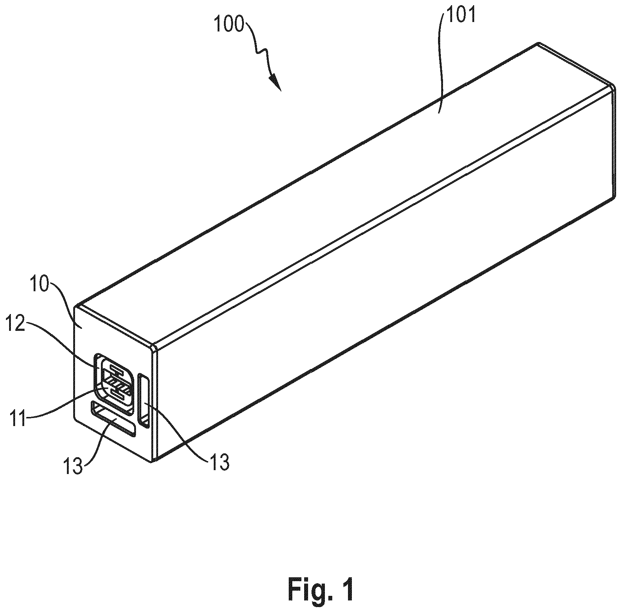

**Fig. 1** zeigt eine Außenansicht einer bevorzugten Ausführungsform einer erfindungsgemäßen Batterie 100. Das Gehäuse der Batterie 100 wird von einer metallischen Röhre 101, insbesondere einer Aluminiumröhre, gebildet, wobei die Röhre einen rechteckigen Querschnitt aufweist.

Innerhalb der Röhre 101 sind als elektrochemische Energiespeicherelemente Lithium-Ionen-Zellen in Form von zylindrischen Rundzellen angeordnet. Die elektrische Verschaltung der Energiespeicherelemente erfolgt über eine Batteriemanagement-Elektronik auf einer Platine, die zusammen mit einem Mikroprozessor das Batteriemanagementsystem bildet.

Die dem Betrachter zugewandte Stirnseite der Batterie 100 ist von einer endständigen Abschlusskappe 10 verschlossen. In die Abschlusskappe 10 ist ein Stecker 11 integriert, über den die Strom- und Signalführung der miteinander verschalteten Energiespeicherelemente nach außen erfolgt. Die Abschlusskappe 10 ist als Kunststoffspritzgussteil ausgebildet. Der Stecker 11 ist von einer umlaufenden Vertiefung 12 umgeben. Die Vertiefung 12 dient als Führung für das einzusteckende Gegenstück des Steckers.

An der hier nicht sichtbaren Innenseite der Abschlusskappe 10 erfolgt die Kontaktierung des Steckers mit den Energiespeicherelementen, beispielsweise direkt über die Platine.

Auf der Außenfläche der Abschlusskappe 10 sind weiterhin zwei rinnenförmige Vertiefungen 13 vorgesehen. Diese Vertiefungen 13 bilden Halte- und/oder Führungselemente für die Halterung der Batterie 100, beispielsweise am Rahmen eines elektrischen Fahrrads. Die Vertiefungen 13 können insbesondere als Positionierhilfen für die Anbringung der Batterie 100 an dem Fahrrad dienen.

Die der Abschlusskappe 10 gegenüberliegende Stirnseite des Gehäuses kann ebenfalls von einem Kunststoffspritzgussteil als weiterer Endkappe verschlossen sein. Alternativ können auch die Endstücke aus Aluminium oder einem anderen Metall gebildet sein.

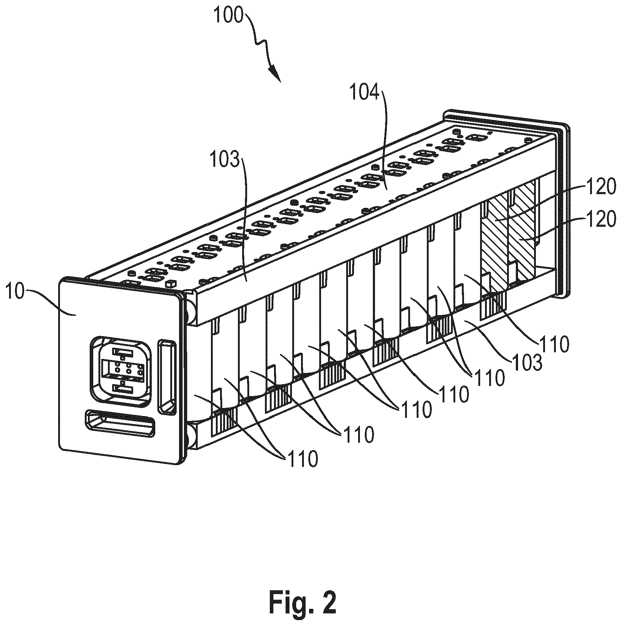

**Fig. 2** zeigt eine seitliche Ansicht der erfindungsgemäßen Batterie 100 aus Fig. 1 mit entferntem Gehäuse. Zu erkennen sind die im Inneren der Batterie enthaltenden zylindrischen Rundzellen 110 und 120. In dieser bespielhaft gezeigten Ausführungsform sind insgesamt 39 zylindrische Rundzellen 110, 120 vorgesehen. Das Primärpack wird von drei parallel geschalteten Reihen zu jeweils elf seriell miteinander verschalteten Rundzellen 110 (Konfiguration 11S3P) gebildet. Das Sekundärpack wird von sechs seriell miteinander verschalteten Rundzellen 120 (Konfiguration 6S1P) gebildet. Das Primärpack und das Sekundärpack sind in bevorzugten Ausführungsformen parallel zueinander geschaltet. Die im Sekundärpack zusammengefassten Energiespeicherelemente 120 haben eine unterstützende Funktion für das Primärpack.

In anderen Ausführungsformen kann es alternativ oder zusätzlich vorgesehen sein, dass die Energiespeicherelemente 120 für ein aktives Balancing der Energiespeicherelemente 110 des Primärpacks eingesetzt werden.

In anderen, besonders bevorzugten Ausführungsformen sind beispielsweise zwei parallel geschaltete Reihen mit jeweils 12 seriell verschalteten Rundzellen (Konfiguration Primärpack: 12S2P) plus eine Reihe mit sechs seriell verschalteten Rundzellen (Konfiguration Sekundärpack: 6S1P) vorgesehen. Durch Parallelschaltung von Primärpack und Sekundärpack addieren sich deren Kapazitäten und es ergibt sich ein Gesamtbatteriepack der Konfiguration 12S2,5P.

Die einzelnen Rundzellen 110, 120 stehen aufrecht und sind mit paralleler Ausrichtung der Längsachsen in enger Packung angeordnet. Die Rundzellen 110, 120 werden über einen oberen und unteren Rahmen aus Kunststoff (Zellhalter 103) gehalten und können zur Fixierung mit dem Zellhalter verklebt sein. Die elektrische Verschaltung der Rundzellen 110, 120 erfolgt über die Batteriemanagement-Elektronik, die auf der Platine 104 angeordnet ist.

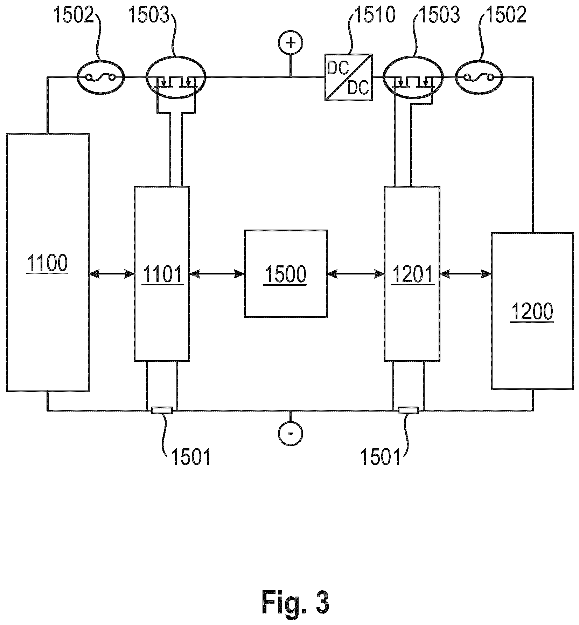

**Fig. 3** zeigt ein Blockschaltbild zur Illustration der Zuschaltung der Kapazität des Sekundärpacks zu der Kapazität des Primärpacks. Links im Blockschaltbild ist das Primärpack 1100 dargestellt, das beispielsweise 24 Energiespeicherelemente umfasst. Die Energiespeicherelemente können beispielsweise in zwei parallel geschalteten Reihen angeordnet sein, wobei die beiden Reihen jeweils zwölf seriell miteinander verschaltete zylindrische Rundzellen (z.B. Lithium-Ionen-Zellen) umfassen (Konfiguration 12S2P). Rechts im Blockschaltbild ist das Sekundärpack 1200 dargestellt, das beispielsweise aus sechs seriell miteinander verschalteten Energiespeicherelementen besteht (Konfiguration 6S1P). Die Verschaltung der Energiespeicherelemente des Sekundärpacks 1200 und die Verschaltung der Energiespeicherelemente des Primärpacks 1100 erfolgt über eine Batteriemanagementsystem, das erste Mess- und/oder Steuer- und/oder Schutzschaltungen 1101 für das Primärpack 1100 und zweite Mess- und/oder Steuer- und oder Schutzschaltungen 1201 für das Sekundärpack 1200, einen Mikroprozessor 1500 zur Ansteuerung der Schaltungen 1101 und 1201 sowie Messwiderstände 1501 umfasst.

Die in diesem Ausführungsbeispiel vorgesehene Zuschaltung der Kapazität des Sekundärpacks 1200 zu der Kapazität des Primärpacks 1100 erfolgt über einen bidirektionalen Gleichspannungswandler 1510.

Wenn beispielsweise von einem Kunden des Batterieherstellers die Kapazität einer Batterie, die mit Energiespeicherelementen in der Konfiguration 12S2P ausgestattet ist, um 25 % erhöht werden soll, ohne die Gesamtspannung zu verändern, kann dies durch Zuschaltung des Sekundärpacks (Konfiguration 6S1P) erfolgen. Ausgehend von dem Primärpack der Konfiguration 12S2P (24 Energiespeicherelemente Gesamtverbund) besteht die erfindungsgemäße Batterie als Hybrid-Batteriepack aus dem 12S2P-Primärpack und dem 6S1P-Sekundärpack, woraus sich eine Gesamtbatterie mit einer Spannung und Kapazität einer äquivalenten 12S2,5P-Batterie ergibt. Diese Konfiguration ist bei konventionellen Batterien nicht möglich.

Mechanisch sind das Primär- und das Sekundärpack vollständig in das Gehäuse der Batterie integriert. Die Untergliederung in Primärpack und Sekundärpack ergibt sich ausschließlich aus der elektrischen Verschaltung der einzelnen Energiespeicherelemente. Somit kann eine optimierte Batterie bereitgestellt werden, die an die jeweiligen Anforderungen im Hinblick auf Kapazität und Leistungsfähigkeit optimal angepasst werden kann.

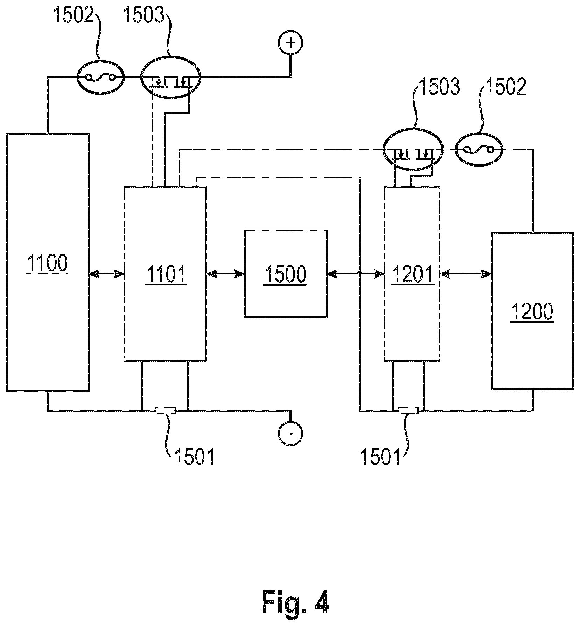

**Fig. 4** zeigt eine Ausführungsform, bei der die Energiespeicherelemente des Sekundärpacks 1200 für ein aktives Balancing der Energiespeicherelemente des Primärpacks 1100 genutzt werden. Vergleichbar mit dem Blockschaltbild der Fig. 3 sind die Energiespeicherelemente des Primärpacks 1100 und die Energiespeicherelemente des Sekundärpacks 1200 über ein Batteriemanagementsystem, das erste Mess- und/oder Steuer- und/oder Schutzschaltungen 1101 für das Primärpack 1100, zweite Mess- und/oder Steuer- und oder Schutzschaltungen 1201 für das Sekundärpack 1200 und einen Mikroprozessor 1500 zur Ansteuerung der Schaltungen 1101 und 1201 umfasst, verschaltet. Die Verschaltung erfolgt auf einer gemeinsamen Platine, auf der die genannten Komponenten des Batteriemanagementsystems (neben weiteren Komponenten wie der Sicherung 1502 oder den Steuerschaltungen 1503) angeordnet sind.

Im Unterschied zu der Ausführungsform gemäß Fig. 3 ist in diesem Ausführungsbeispiel die Batteriemanagement-Elektronik 1101 des Primärpacks 1100 so konfiguriert, dass sie eine aktive Balancing-Funktion integriert, die die einzelnen Energiespeicherelemente des Sekundärpacks 1200 für ein Balancing der Energiespeicherelemente des Primärpacks nutzen kann, um eine kritische Tiefenentladung und/oder eine Überladung der einzelnen Energiespeicherelemente des Primärpacks 1100 zu vermeiden. Durch das Balancing kann die Lebensdauer der Energiespeicherelemente erhöht und deren Performance verbessert werden.

## Patentansprüche

1. Batterie (100) mit einem Gehäuse (101) und einer Mehrzahl darin angeordneter wiederaufladbarer elektrochemischer Energiespeicherelemente (110, 120) sowie einem positiven Pol und einem negativen Pol, die von außerhalb des Gehäuses der Batterie abgreifbar sind, mit den Merkmalen
a. alle Energiespeicherelemente (110, 120) sind mit einer gemeinsamen Platine (104) verbunden und/oder in oder an einem gemeinsamen Zellhalterrahmen (103) angeordnet; und
b. ein erster Teil der Energiespeicherelemente (110) ist durch serielle und/oder parallele Verschaltung zu einem Primärpack (1100) zusammengefasst, wobei das Primärpack eine erste Kapazität aufweist und eine erste Spannung liefert; und
c. ein zweiter Teil der Energiespeicherelemente (120) ist durch serielle und/oder parallele Verschaltung zu einem Sekundärpack (1200) zusammengefasst, wobei das Sekundärpack vorzugsweise eine zweite Kapazität aufweist und eine zweite Spannung liefert; und
d. das Primärpack (1100) weist einen positiven Ausgang auf, der mit dem positiven Pol der Batterie elektrisch verbunden ist, und das Primärpack (1100) weist einen negativen Ausgang auf, der mit dem negativen Pol der Batterie elektrisch verbunden ist, und weiter **gekennzeichnet durch** mindestens eines der folgenden Merkmale:
e. Die Energiespeicherelemente (110) des Primärpacks (1100) und die Energiespeicherelemente (120) des Sekundärpacks (1200) sind jeweils insgesamt über eine Batteriemanagement-Elektronik (1101, 1201) derart miteinander verschaltbar, dass sich die Kapazitäten und/oder Spannungen von Primärpack und Sekundärpack addieren;
und/oder
f. jedes Energiespeicherelement (120) des Sekundärpacks (1200) ist einem oder mehreren Energiespeicherelementen (110) des Primärpacks (1100) zugeordnet und mit diesem oder diesen über eine Batteriemanagement-Elektronik (1101, 1201) derart verschaltbar, dass die Energiespeicherelemente (120) des Sekundärpacks das oder die jeweils zugeordneten Energiespeicherelemente (110) des Primärpacks unabhängig von den weiteren Energiespeicherelementen des Primärpacks laden und/oder entladen können.

2. Batterie nach Anspruch 1 mit mindestens einem der folgenden zusätzlichen Merkmale:
a. Die Energiespeicherzellen des Sekundärpacks (1200) und/oder die Batteriemanagement-Elektronik (1101, 1201) sind zur Erhöhung der von den Energiespeicherzellen des Primärpacks (1100) bereitgestellten ersten Kapazität ausgebildet.
b. Die Erhöhung der Kapazität beträgt ein nicht ganzzahliges Mehrfaches der von den Energiespeicherzellen des Primärpacks (1100) bereitgestellten ersten Kapazität.

3. Batterie nach Anspruch 1 oder Anspruch 2 mit dem folgenden zusätzlichen Merkmal:
a. Die Energiespeicherzellen (120) des Sekundärpacks (1200) und/oder die Batteriemanagement-Elektronik (1101, 1201) sind für ein aktives Balancing der Energiespeicherzellen (110) des Primärpacks (1100) ausgebildet.

4. Batterie nach einem der vorhergehenden Ansprüche mit mindestens einem der folgenden zusätzlichen Merkmale:
a. Die Batterie umfasst ein Batteriemanagementsystem, dass das aktive Balancing und/oder die Verschaltung der Energiespeicherelemente des Primärpacks (1100) und der Energiespeicherelemente des Sekundärpacks (1200) zwecks Erhöhung der von den Energiespeicherzellen des Primärpacks bereitgestellten Kapazität und/oder Spannung steuert und/oder regelt.
b. Das Batteriemanagement-System umfasst erste Mess- und/oder Steuer- und/oder Schutzschaltungen (1101) für das Primärpack (1100) und zweite Mess- und/oder Steuer- und oder Schutzschaltungen (1201) für das Sekundärpack (1200) und einen Mikroprozessor (1500) zur Ansteuerung der Schaltungen (1101) und (1201).

5. Batterie nach einem der vorhergehenden Ansprüche mit dem folgenden zusätzlichen Merkmal:
a. Das Sekundärpack (1200) und das Primärpack (1100) sind parallel geschaltet.

6. Batterie nach einem der vorhergehenden Ansprüche mit mindestens einem der folgenden zusätzlichen Merkmale:
a. Die Batterie umfasst einen Spannungswandler (1510).
b. Der Spannungswandler (1510) ist dazu ausgebildet, die Spannung des Sekundärpacks (1200) auf die Spannung des Primärpacks (1100) zu erhöhen.

7. Batterie nach einem der vorhergehenden Ansprüche mit mindestens einem der folgenden zusätzlichen Merkmale:
a. Das Primärpack (1100) liefert eine Hauptspannung in einem Spannungsbereich von 30 bis 60 Volt, vorzugsweise von 48 Volt.
b. Das Sekundärpack (1200) liefert eine Nebenspannung in einem Spannungsbereich von 8 bis 15 Volt, vorzugsweise 9 bis 13 Volt, besonders bevorzugt von 12 Volt.

8. Batterie nach einem der vorhergehenden Ansprüche mit mindestens einem der folgenden zusätzlichen Merkmale:
a. In dem Primärpack (1100) sind mehr elektrochemische Energiespeicherelemente angeordnet als in dem Sekundärpack (1200).
b. In dem Primärpack (1100) sind 24 bis 42, vorzugsweise 24, elektrochemische Energiespeicherelemente (110) angeordnet.
c. In dem Sekundärpack (1200) sind 4 bis 12, vorzugsweise 6, elektrochemische Energiespeicherelemente (120) angeordnet.

9. Batterie nach einem der vorhergehenden Ansprüche mit mindestens einem der folgenden zusätzlichen Merkmale:
a. Das Primärpack (1100) umfasst zwei bis vier, bevorzugt zwei oder drei, parallel verschaltete Reihen mit jeweils 10 bis 20, bevorzugt 12 oder 13, seriell verschalteten Energiespeicherelementen (110).
b. Das Sekundärpack (1200) umfasst ein bis drei parallel verschalteten Reihe(n) mit jeweils 2 bis 6, bevorzugt 6, seriell verschalteten Energiespeicherelementen (120), wobei im Fall von zwei oder drei Reihen die Reihen parallel verschaltet sind.

10. Batterie nach einem der vorhergehenden Ansprüche mit mindestens einem der folgenden zusätzlichen Merkmale:
a. Die Energiespeicherelemente (110, 120) sind zylindrische Rundzellen.
b. Die Energiespeicherelemente (110, 120) sind Zellen vom Typ 21700.
c. Die Energiespeicherelemente (110, 120) sind Lithium-Ionen-Energiespeicherelemente.

11. Batterie nach einem der vorhergehenden Ansprüche mit dem folgenden zusätzlichen Merkmal:
a. Die Energiespeicherelemente (120) des Sekundärpacks (1200) haben andere elektrische Eigenschaften als die Energiespeicherelemente (110) des Primärpacks (1100).

12. Batterie nach einem der vorhergehenden Ansprüche mit mindestens einem der folgenden zusätzlichen Merkmale:
a. Die Batterie (100) ist ein Wechsel-Akkumulator.
b. Die Batterie (100) ist ein Akkumulator für ein elektrisches Fahrzeug.
c. Die Batterie (100) ist ein Akkumulator für ein elektrisches Fahrrad.
